# EUROPEAN PATENT APPLICATION

(11) **EP 1 142 690 A1**
(43) Date of publication of application: **10.10.2001**
(21) Application number: 00107269.3
(22) Date of filing: 04.04.2000
(51) Int. Cl.: B29C 51/16

(54) **Method and apparatus for producing trays with a plastic film laminated thereon**

(71) Applicant: BRODRENE HARTMANN A/S, DK-2800 Lyngby (DK)
(72) Inventor: Frederiksen, John Hoffmann, 3500 Vaerlose (DK); Rasmussen, Torben, 2765 Smorum (DK)
(74) Representative: Roerboel, Leif

(57) **Abstract**

The invention relates to an apparatus and method for laminating a plastic film to prefabricated trays (5) from for example moulded pulp or plastic foam. Thus, an environmental friendly and water-resistant tray (5) for food products and for other products such as packages for industrial products is provided. The apparatus comprises a feeding station (110), a plastic film supply unit (47), a heating station (69), a laminating station (80) with a suction mould and conveyor apparatus (56) for conveying the prefabricated trays (5) through the laminating line.

(It is suggested that Figure 2 be published with the Abstract).

## Description

### TECHNICAL FIELD

The present invention relates to an apparatus for laminating a plastic film to prefabricated trays. The invention also relates to a method of laminating plastic film to prefabricated trays.

### BACKGROUND ART

Prefabricated trays made of inorganic materials such as for example foamed plastic, or organic materials such as moulded pulp, or mixtures of organic and inorganic materials such as starch and chalk are a desirable form of packaging since they can be mass produced in an inexpensive manner. The use of such prefabricated trays as food trays and the like has been desired since several decades. The above mentioned materials are however not resistant to moist or/and are not as tight and as such thus not suitable for holding moist food or beverages. Therefore, several techniques have been developed for coating or laminating prefabricated trays of these materials to render them moist resistant and/or to provide them with a gas barrier. Other types of prefabricated trays for which the present invention could be used are packages for industrial products such as mobile phones or print cartridges which receive a plastic film to prevent scratching and dust pollution by the articles. There exists therefore also a need for a technique to coat or laminate prefabricated trays made from the above-mentioned materials. None of the known techniques for this purpose have been able to meet the requirements for a successful commercial application.

EP-A-0-196 799 discloses an apparatus for laminating plastic film onto moulded pulp trays. Prefabricated trays are taken from a stack of trays by a destacking apparatus and placed on a conveyor. The prefabricated trays are fed by the conveyor and lined with a superimposed plastic film at a laminating station where the plastic film is bonded to the interior of the tray. This apparatus for the laminating of films to prefabricated trays does not operate at desirably high speeds that allow successful commercial application.

### DISCLOSURE OF THE INVENTION

On this background, it is the object of the present invention to provide an apparatus for producing prefabricated trays of the kind referred to initially that operates at high rates.

It is another object of the present invention to provide a method laminating a plastic film onto prefabricated trays of the kind referred to initially that allows operation at high rates.

These objects are achieved in accordance with claims 1, 5, 8, 10 and 16, respectively. Further embodiments are defined in the dependent claims.

### BRIEF DESCRIPTION OF THE DRAWINGS

In the following detailed portion of the present description, the invention will be explained in more detail with reference to the exemplary embodiments shown in the drawings, in which
Figure 1 is a diagrammatic top of the laminating line,
Figure 2 is a side view of the laminating line according to the invention, and
Figure 3a and 3b are elevated views on a plurality of interconnected prefabricated articles and on a disconnected prefabricated article.

### DETAILED DESCRIPTION OF THE INVENTION

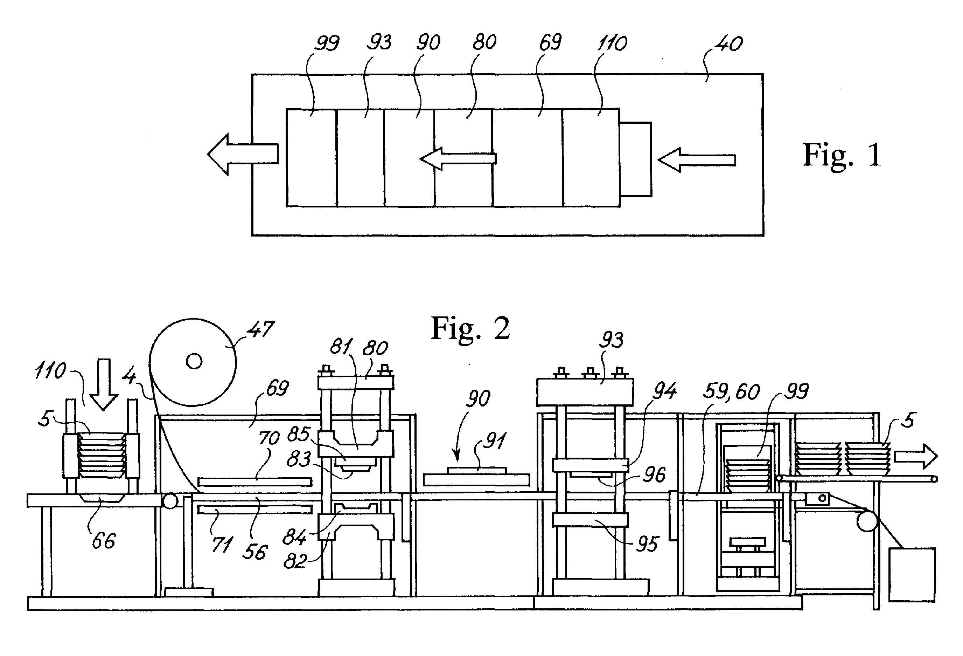

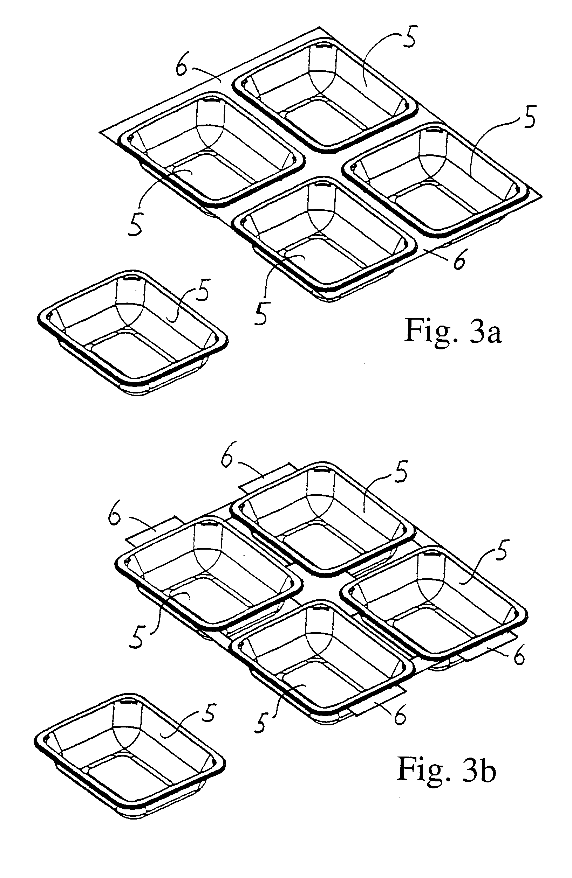

With reference to the figures 1 and 2, a laminating apparatus for laminating plastic film to prefabricated trays 5 is shown. The apparatus starts with a feeding station 110 for delivering single trays 5 to the laminating line. A group of prefabricated trays 5 may be used in the form of a common continuous body with bridges interconnecting the prefabricated trays 5 (cf. Figure 3a). Instead of a common plate, the bridge connection may also be formed by ribs (cf. Figure 3b), and the bridge connection may also comprise a directly abutting connection between the mutually facing sides of two ore more adjacent prefabricated trays. In this case the feeding station 110 will deliver a single interconnected body comprising several prefabricated trays 5 to the laminating line at a time.

The prefabricated trays 5 are typically three dimensionally contoured packages of foamed plastic, of moulded pulp or of mixtures comprising mainly of starch and chalk such as food- or meat trays. The trays 5 or plurality of interconnected trays 5 are provided with laterally extending tabs or flanges 6 for gripping or engaging by a conveyor apparatus 56.

The plastic film 4 must be suitable for thermo-forming, preferable gas impermeable or comprise a barrier against certain gases and moisture. Multilayer films 4 with an overall thickness of approximately 50 µm provide sufficient thickness after laminating to comply with the barrier standards corresponding to the needs of the product to be packed.

The laminating apparatus is arranged in a clean room 40 in order to avoid contamination and to meet hygiene requirements. In the clean room 40, an overpressure is maintained in order to avoid unclean air coming in.

The laminating line comprises a feeding station 110, a heating station 69, a laminating station 80, a crystallising station 90, a cutting station 93, a stacking station 99 and a conveyor apparatus 56 which serves to guide and transport the prefabricated trays and the plastic film through the stations.

At the start of the laminating apparatus, the prefabricated trays 5 or the plurality of prefabricated trays 5 are de-stacked in the feeding station 110, in which the trays 5 are de-stacked and delivered to the conveyor apparatus 56.

The conventional conveyor apparatus 56 comprises two transversely spaced rails 59 extending along the longitudinal axis of the laminating apparatus. The distance between the rails 59 can be adjusted in accordance with the width of the prefabricated trays 5 or the width of the plurality of interconnected prefabricated trays 5. Each rail 59 defines two channels (not shown), an upper and a lower channel in which a spiked chain is guided. In the upper channel, the spiked chain moves forward through the laminating apparatus while in the lower channel the spiked chain returns to the start of the laminating apparatus. The upper channel also defines a surface for guiding the tabs 6 or flanges of the prefabricated trays 5 and is provided with a groove in which the spikes partially extend. Thus, the spikes extend through the tabs or flanges 6 and positively engage the flanges or tabs 6. The spikes penetrate the tabs or flanges 6 when the prefabricated tray 5 or the plurality of interconnected prefabricated trays are delivered by the feeding station 110. A movable part of the rails forming an inlet gate 66 under the feeding station is opened to receive a tray 5 and closed to engage the tabs 6. The chain is driven to transport the prefabricated trays to the next station.

The plastic film 4 is fed from a film reel 47 into the rails 59 through a slot in the guiding surface of the upper channels. The spikes of the chain also penetrate the plastic film 4 and the plastic film 4 and the prefabricated trays 5 are moved in unison by the spiked chain to the heating station 69.

The heating station 69 comprises a heating element above 70 and one under 71 the prefabricated trays 5 and the plastic film 4. The plastic film 4 only absorbs a part of the radiation from the upper heating element 70 and the rest can be absorbed by the prefabricated trays 5. The plastic film 4 is heated to above the glass temperature and the prefabricated trays have a temperature of less than 200 degrees Celsius when they leave the heating station 69.

The next station is a conventional laminating station 80 which comprises an upper 81 and a lower table 82. The upper table 81 is provided with die press tool 83 whereas the lower table 82 is provided with a heated suction mould 84. Both the upper and lower table move towards the film 4 and the prefabricated tray 5. A partial vacuum is applied to the suction mould 84. The film 4 is bonded to the prefabricated trays 5 by being drawn downwardly by the partial vacuum applied to the suction mould 84 through the prefabricated tray 5 and/or by the press tool. The upper table 81 may also be provided with means (not shown) to apply compressed air to the upper side of the plastic sheet 4.

Further, the laminating station 80 comprises a separately movable hot tool 85 for laminating the plastic film 4 to selected (flange) areas of the prefabricated trays 5 in order to positively weld the film 4 to these areas of the prefabricated trays 5.

The trays 5 with the film 4 laminated thereon are then transported by the conveyor 56 to the crystallisation station 90. This station comprises an upper heating element 91. By exposing the plastic film 4 to heat, a crystallisation from amorphous to crystalline can take place if desired. In the case of food trays, this renders the laminated prefabricated tray 5 resistant to the heat of a domestic oven.

Next, a conventional cutting station 93 comprising an upper movable 94 and a lower movable tool 95 for die cutting in order to separate the plurality of interconnected prefabricated trays 5 and/or for removing superfluous flange material such as the tabs or flanges 6 for gripping by the conveyor 56. Either the upper tool 94 or the lower tool 95 is provided with a knife 96 to cut off the flange areas. The prefabricated trays 5 remain connected to the "waste" material by narrow bridges in order to allow further transport to a stacking station.

After the cutting station 93, a conventional stacking station 99 stacks the laminated prefabricated trays 5 so that they may be removed batch-wise from the laminating apparatus.

According to a not shown embodiment, a filling and sealing line is arranged in-line or off-line with the laminating apparatus for filling the trays with food or other products and then sealing the filled tray with a plastic top sheet. If the filling and sealing line is arranged in-line with the laminating line, the latter does not need a stacking station.

### LIST OF REFERENCE NUMERALS

- 4: plastic film
- 5: prefabricated tray
- 6: tab or flange
- 40: clean room
- 47: film reel
- 56: conveyor apparatus
- 59: rail
- 66: inlet gate
- 69: heating station
- 70: upper heating element
- 71: lower heating element
- 80: laminating station
- 81: upper table
- 82: lower table
- 83: press tool
- 84: suction mould
- 85: hot tool
- 90: crystallisation station
- 91: upper heating element
- 93: cutting station
- 94: upper tool
- 95: lower tool
- 99: stacking station
- 110: feeding station

## Claims

1. Apparatus for laminating a plastic film (4) onto prefabricated trays (5) comprising a feeding station (110), a plastic film supply unit (47), a heating station (69), a laminating station (80) with a suction mould (84) and conveyor apparatus (56) for transporting the prefabricated trays (5) through the laminating apparatus **characterised in that** the conveyor apparatus (56) comprise two drive means arranged at laterally opposite sides of the prefabricated trays (5) and extending along the stations of the apparatus for engaging and transporting the trays (5) through the apparatus.

2. Apparatus according to claim 1, wherein the drive means comprise a belt, a chain or a cable, preferably forming an endless loop.

3. Apparatus according to claim 2, wherein the drive means further comprise a rail with an inlet gate (66) at the feeding station (110)

4. Apparatus according to any of claims 1 to 3, wherein a plurality of interconnected trays (5) is transported together through the apparatus.

5. Apparatus for laminating a plastic film (4) onto prefabricated trays (5) comprising a feeding station (110), a plastic film supply unit (47), a heating station (69) heating the prefabricated trays (5) through the film (4) thereby heating the film (4) and the trays (5) simultaneously, a laminating station (80) with a suction mould (84) and conveyor apparatus (56) for transporting the prefabricated trays (5) through the laminating apparatus.

6. Apparatus according to claim 5, wherein the plastic film (4) and the prefabricated trays (5) are moved simultaneously through the heating station.

7. Apparatus according to claim 6 wherein the heating station (69) comprises an upper heating element (70) and a lower heating element (71).

8. Apparatus for laminating a plastic film (4) onto prefabricated trays (5) that are provided with laterally protruding tabs or flanges (6), or on to a plurality of interconnected trays (5) provided with laterally protruding tabs or flanges (6), comprising a plastic film supply unit (47), a heating station (69) and a laminating station (80) with a suction mould (84), conveyor apparatus (56) for transporting the prefabricated trays (5) through the laminating apparatus having means for gripping the prefabricated trays at the laterally protruding tabs or flanges (6).

9. Apparatus according to claim 8 wherein the conveyor apparatus (56) engage both the tabs or flanges (6) and the plastic film (4) with a common engagement means.

10. Apparatus for laminating a plastic film (4) onto prefabricated trays (5) comprising a feeding station (110), a plastic film supply unit (47), a heating station (69), a laminating station (80) comprising a heated suction mould (84) and conveyor apparatus (56) for transporting the prefabricated trays (5) through the laminating apparatus.

11. Apparatus according to claim 10, wherein the suction mould (84) is heated in particularly at walls that extend at a substantial angle from the horizontal.

12. Apparatus according to claim 10 or 11, wherein the laminating station (80) comprises a hot tool (85) for applying to the plastic film (4) in order to weld the film (4) to selected areas of the prefabricated trays (5).

13. Apparatus according to any of claims 1 to 11, wherein the laminating station (80) comprises means for applying underpressure to the film (4) through the prefabricated trays (5) and/or a press tool (83) and/or means for applying overpressure to the film in order to shape the plastic film (4) and press it onto the prefabricated trays (5) and secure sufficient bonding of the film to the prefabricated trays (5).

14. Apparatus according to any of claims 1 to 13 further comprising a film crystallisation station (90) after the laminating station (80).

15. Apparatus according to any of claims 1 to 14 further comprising a de-stacking apparatus at the feeding station (110).

16. Method of producing prefabricated trays (5) with a plastic film (4) laminated thereon comprising the steps of, supplying and positioning prefabricated trays (5) or plurality of interconnected prefabricated trays (5),
engaging the prefabricated trays (5) or plurality of prefabricated trays (5) by a transport means (56),
supplying a plastic film (4),
engaging the plastic film (4) by the same transport means (56),
heating the plastic film (4) and the moulded prefabricated trays (5) and
laminating the film (4) onto the moulded prefabricated trays (5) by applying suction through the prefabricated trays (5).
